Europäisches Patentamt

European Patent Office

Office européen des brevets

(19)

(11) Numéro de publication : **0 032 336**
**B1**

(12) **FASCICULE DE BREVET EUROPÉEN**

(45) Date de publication du fascicule du brevet :
22.06.83

(51) Int. Cl.³ : **B 65 G 65/20**

(21) Numéro de dépôt : **80401831.5**

(22) Date de dépôt : **19.12.80**

(54) **Roue-pelle à godets à déversement frontal.**

(30) Priorité : **09.01.80 FR 8000370**

(43) Date de publication de la demande :
**22.07.81 Bulletin 81/29**

(45) Mention de la délivrance du brevet :
**22.06.83 Bulletin 83/25**

(84) Etats contractants désignés :
**BE DE GB IT NL SE**

(56) Documents cités :
**DE A 2 049 138**
**DE B 1 093 292**
**NL C 74 112**

(73) Titulaire : **FIVES-CAIL BABCOCK, Société anonyme**
**7 rue Montalivet**
**F-75383 Paris Cedex 08 (FR)**

(72) Inventeur : **Chever, René**
**75, boulevard de Picpus**
**F-75012 Paris (FR)**

(74) Mandataire : **Fontanié, Etienne**
**FIVES-CAIL BABCOCK 7, rue Montalivet**
**F-75383 Paris Cedex 08 (FR)**

Jouve, 18, rue St-Denis, 75001 Paris, France

Roue-pelle à godets à déversement frontal

La présente invention concerne une roue-pelle à godets à déversement frontal, notamment pour charger de matériaux en vrac les godets d'un élévateur à chaîne à godets, ledit élévateur et ladite roue-pelle étant disposés suivant un même plan vertical médian.

On connaît déjà une roue-pelle à godets à déversement frontal dont chaque godet prélève des matériaux en vrac, à l'intérieur de la cale d'un navire, par exemple, lorsqu'il se trouve en position basse, élève les matériaux le long de son parcours ascendant, et les déverse ensuite extérieurement lorsque, après avoir dépassé la position haute, il effectue son parcours descendant. Le plan médian de déversement coïncide avec le plan vertical médian de la roue-pelle, par rapport auquel les godets sont fixés symétriquement sur la périphérie de ladite roue-pelle, disposition qui caractérise une roue-pelle du type à déversement frontal.

Dans le cas où une roue-pelle de ce type est utilisée pour charger frontalement les godets d'un élévateur, dans une installation de déchargement de navires, par exemple, il est important que le remplissage des godets de l'élévateur soit effectué de telle sorte que les matériaux déversés par chaque godet de la roue-pelle soient dirigés convenablement pour être reçus par les godets de l'élévateur.

Dans la plupart des installations connues une quantité notable de matériaux déversés par la roue-pelle n'est pas admise dans un godet de l'élévateur. Ces matériaux tombent alors dans la cale à décharger d'où ils doivent être repris par la roue-pelle.

Le document NL-C-74 112 décrit une roue-pelle à godets à déversement frontal du type énoncé dans le préambule de la revendication 1. Chacun de ses godets présente une paroi interne plane réalisée sous forme de tamis, des moyens étant prévus pour secouer les godets dans la partie la plus élevée de leur parcours, en vue d'éliminer l'eau contenue dans les matériaux transportés. La paroi interne de chaque godet se prolonge par une courte rampe de forme plane.

Avec un godet de ce genre, la paroi plane perforée constituant le tamis ne joue pratiquement aucun rôle pour avancer le début du glissement des matériaux. Ces derniers sont, au contraire, retenus pendant la phase de tamisage par la rampe dont la fonction essentielle est d'empêcher leur chute, avant de faciliter leur déversement lorsqu'un godet bascule après avoir franchi la zone de tamisage.

Le document DE-B-1 093 292 décrit une roue-pelle à godets à déversement frontal, d'un type particulier. Les godets sont disposés radialement et de manière adjacente, une paroi commune séparant deux godets successifs. La paroi sur laquelle glissent les matériaux contenus dans un godet pendant son parcours descendant, présente une forme courbe, d'abord convexe, puis concave, avec, bien entendu, un point d'inflexion intermédiaire. On peut admettre que la partie concave de la paroi considérée, bien que ne constituant pas une rampe de déversement prolongeant la paroi du godet dont elle fait partie intégrante, joue en partie un rôle analogue à une telle rampe. Par contre, en raison de la forme convexe de la partie de la paroi qui précède cette « rampe », le début du glissement des matériaux se trouve retardé.

L'invention vise essentiellement à réaliser une disposition particulière de la roue-pelle permettant d'avancer le début du glissement des matériaux le long de la paroi interne d'un godet approchant de sa position de déversement, et de donner à chaque particule de matériaux quittant la roue-pelle, une trajectoire suivant laquelle le rapport de la composante horizontale de la vitesse à la composante verticale de ladite vitesse soit augmenté, de manière à obtenir la position la plus favorable au déversement.

On entend ci-dessus par paroi interne, la paroi qui délimite la cavité du godet du côté radialement le plus proche de l'axe de rotation de la roue-pelle, par opposition à la paroi externe qui délimite ladite cavité du côté radialement le plus éloigné dudit axe de rotation. La paroi interne et la paroi externe d'un godet sont, bien entendu, reliées par deux parois latérales et par une paroi de fond, cette dernière étant éventuellement formée par un prolongement de la paroi externe.

L'invention prévoit, en outre, des moyens pour récupérer les matériaux qui n'auraient pu être déchargés normalement dans un godet de l'élévateur à godets coopérant. *

Elle a plus précisément pour objet une roue-pelle à godets à déversement frontal, notamment pour charger de matériaux en vrac les godets d'un élévateur dont le plan vertical médian coïncide avec celui de la roue-pelle, chaque godet de la roue-pelle présentant une paroi interne qui se prolonge par une rampe de déversement, caractérisée en ce que la paroi interne est de forme courbe concave, en ce que la rampe de déversement est de forme courbe concave, ladite rampe de déversement étant profilée de façon que pendant la trajectoire des particules de matériau sur ladite rampe de déversement, le rapport de la composante horizontale de la vitesse à la composante verticale de ladite vitesse soit augmenté, et en ce que le profil de la rampe de déversement forme une courbe continue avec celui de la paroi interne.

Ladite courbe continue a un rayon de courbure variable dont la valeur est au moins égale au quart du rayon de la roue-pelle.

La tangente à l'extrémité du profil de la rampe de déversement fait, avec le rayon de la roue-pelle passant par ladite extrémité un angle au plus égal à 70°.

L'extrémité de la rampe de déversement est située sensiblement sur la surface cylindrique fictive qui enveloppe les bords d'attaque de la paroi externe des godets. L'extrémité de la rampe constitue une génératrice de ladite surface cylindrique.

La rampe de déversement d'un godet est avantageusement constituée, sur une partie au moins de sa longueur, par un élément de paroi du godet qui précède, dans le sens de rotation de la roue-pelle.

Suivant une caractéristique de l'invention, il est avantageusement adjoint à la roue-pelle, une plaque inclinée qui est disposée perpendiculairement au plan vertical médian de ladite roue-pelle, à un niveau inférieur à celui de son axe de rotation, côté déversement, de telle sorte que les matériaux qui n'auraient pas été normalement déversés dans un godet de l'élévateur, soient reçus par ladite plaque et dirigés par celle-ci dans un godet suivant dudit élévateur.

L'invention sera mieux comprise en se référant à la description qui suit, faite en regard des dessins annexés, concernant une forme particulière de réalisation donnée à titre d'exemple non limitatif.

La figure 1 est une vue en coupe-élévation de la roue-pelle associée à un élévateur à godets.

La figure 2 est une vue partielle, à plus grande échelle, de la figure 1.

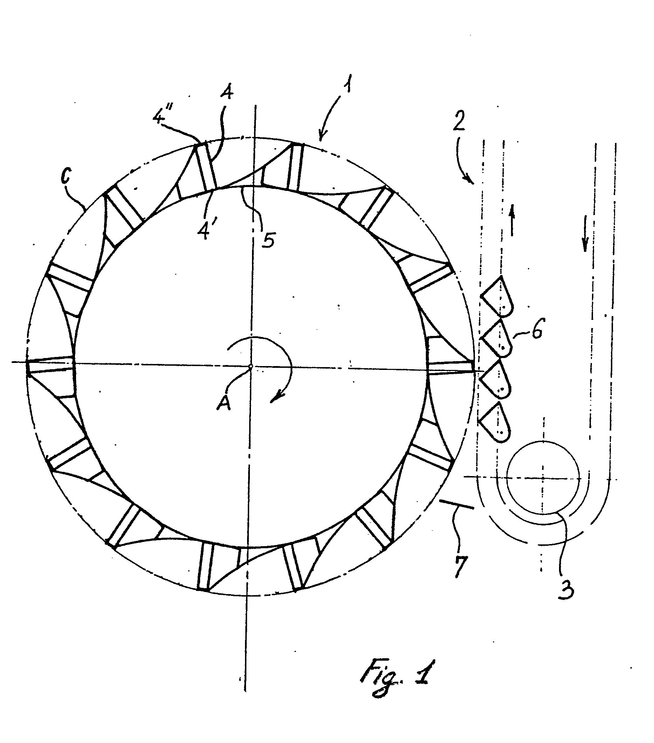

Sur la figure 1, le repère 1 désigne globalement la roue-pelle à déversement frontal. Le repère 2 désigne globalement un élévateur à chaîne à godets dont la seule partie inférieure a été représentée. Ces appareils sont disposés de telle sorte que le plan vertical médian de l'un coïncide avec le plan vertical médian de l'autre. Ce plan vertical médian commun qui correspond au plan de coupe, est perpendiculaire à l'axe de rotation de la roue-pelle 1 et à ceux des roues de retournement de l'élévateur 2 dont la seule roue inférieure 3 est visible sur la figure. Le repère A désigne le tracé de l'axe de rotation de la roue-pelle 1 sur le plan de la figure.

La roue-pelle 1 est avantageusement montée sur un support (non représenté) solidaire du châssis de l'élévateur 2.

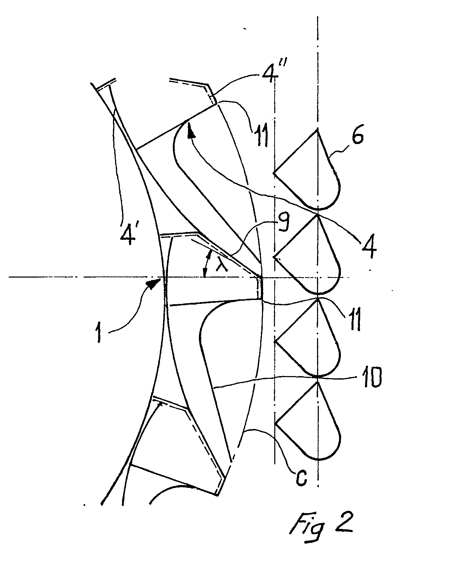

La roue-pelle 1 comporte une pluralité de godets, tels que 4, fixés sur sa périphérie 5 par leur paroi interne 4', par exemple. Des matériaux en vrac, prélevés par les godets 4 à la base de la roue-pelle 1, sont déversés frontalement dans les godets, tels que 6, de l'élévateur 2, dans des conditions qui seront précisées en référence à la disposition qui fait l'objet de la figure 2.

Une plaque inclinée 7 disposée entre la roue-pelle 1 et l'élévateur 2, perpendiculairement à leur plan vertical médian commun, est prévue pour être frappée par les matériaux qui, déversés par les godets 4, ne seraient pas normalement admis dans les godets 6 prévus, dans les conditions précitées, et pour diriger lesdits matériaux vers un autre godet 6 amorçant son parcours ascendant. La plaque 7 dont la largeur est au moins égale à celle des godets 4 et 6, est rendue solidaire, par un moyen de fixation quelconque, du support précité, à un niveau nettement plus bas que celui de l'axe de rotation de la roue-pelle 1.

Sur la figure 2, on voit que chaque godet, tel que 4, présente une paroi interne 4' de forme courbe concave. Ladite paroi interne se prolonge par une rampe de déversement 9 de forme également courbe concave. Le profil de ladite rampe forme avec celui de la paroi interne 4' une courbe continue. Le rayon de courbure de cette courbe est variable, sa valeur minimale étant égale au quart du rayon de la roue-pelle 1.

L'extrémité de la rampe 9 est située au voisinage de la surface cylindrique fictive qui enveloppe les bords d'attaque, tels que 11, des godets tels que 4. Le bord d'attaque 11 du godet 4 est, bien entendu, constitué par le tranchant de la paroi externe 4" dudit godet. Le repère C désigne la section circulaire de la surface cylindrique précitée par le plan de la figure.

La tangente à l'extrémité du profil de la rampe 9 fait, avec le rayon de la roue-pelle 1 passant par ladite extrémité, un angle $\lambda$ au plus égal à 70°.

La rampe 9 est constituée, sur au moins la partie terminale de sa longueur, par un élément de paroi du godet qui précède le godet 4 dans le sens de rotation de la roue-pelle 1.

Une paroi de guidage 10 des matériaux en cours de déversement est prévue de part et d'autre de la rampe 9.

Les matériaux quittant le godet 4 sous l'effet de la gravité et de la force centrifuge glissent le long de la rampe 9 qui redresse leur trajectoire et les dirige, dans les meilleures conditions possibles, en direction des godets 6 de l'élévateur 2 qui parviennent à la hauteur de l'extrémité de la rampe 9, sensiblement au niveau de l'axe de rotation de la roue-pelle 1.

La disposition suivant l'invention, présente, par rapport aux roues-pelles de type usuel, l'avantage de permettre d'avancer le début du glissement des matériaux le long de la paroi interne de chaque godet approchant de la position de déversement.

Bien que l'invention ait été décrite en référence à une forme particulière de réalisation, il va de soi qu'elle ne lui est en rien limitée, et que des modifications peuvent lui être apportées sans sortir de son domaine.

On pourrait, par exemple, prévoir une disposition suivant laquelle la rampe 9 ne serait pas constituée par un élément de paroi de godet qui précède le godet 4 dans le sens de rotation de la roue-pelle 1.

On pourra, bien entendu, remplacer l'un quelconque des moyens décrits par un moyen techniquement équivalent.

**Revendications**

1. Roue-pelle à godets à déversement frontal, notamment pour charger de matériaux en vrac les godets d'un élévateur dont le plan vertical médian coïncide avec celui de la roue-pelle, chaque godet (4) de la roue-pelle (1) présentant une paroi interne (4') qui se prolonge par une rampe de déversement (9), caractérisée en ce que la paroi interne (4') est de forme courbe concave, en ce que la rampe de déversement (9) est de forme courbe concave, ladite rampe de déversement étant profilée de façon que pendant la trajectoire des particules de matériau sur ladite rampe de déversement (9), le rapport de la composante horizontale de la vitesse à la composante verticale de ladite vitesse, soit augmenté, et en ce que le profil de la rampe de déversement (9) forme une courbe continue avec celui de la paroi interne (4').

2. Roue-pelle suivant la revendication 1, caractérisée en ce que ladite courbe continue a un rayon de courbure variable dont la valeur est au moins égale au quart du rayon de la roue-pelle (1).

3. Roue-pelle suivant l'une des revendications 1 ou 2, caractérisée en ce que la tangente à l'extrémité du profil de la rampe de déversement (9) fait avec le rayon de la roue-pelle passant par ladite extrémité, un angle λ au plus égal à 70°.

4. Roue-pelle suivant l'une des revendications 1 à 3, caractérisée en ce que l'extrémité de la rampe de déversement (9) est située sensiblement sur la surface cylindrique fictive qui enveloppe les bords d'attaque (11) de la paroi externe (4'') des godets (4).

5. Roue-pelle suivant l'une des revendications 1 à 4, caractérisée en ce que la rampe de déversement (9) d'un godet (4) est constituée, sur une partie au moins de sa longueur, par un élément de paroi du godet qui précède dans le sens de rotation de la roue-pelle (1).

6. Roue-pelle suivant l'une quelconque des revendications précédentes, caractérisée en ce qu'il lui est adjoint une plaque inclinée (7) disposée perpendiculairement au plan vertical médian commun de la roue-pelle (1) et de l'élévateur à godets (2), à un niveau inférieur à celui de l'axe de rotation de ladite roue-pelle, côté déversement, de telle sorte que les matériaux qui n'auraient pas été déversés dans un godet (6) de l'élévateur (2) frappent ladite plaque qui les dirige vers un godet suivant dudit élévateur.

## Claims

1. Bucket-wheel of the front discharge type, used in particular to load, with bulk materials, the buckets of an elevator, the median vertical plane of which corresponds to that of the bucket-wheel, each bucket (4) of the wheel (1) having an internal wall (4') which is extended by a discharge ramp (9), characterized by the fact that the internal wall (4') is concave, by the fact that the discharge ramp (9) is concave, the said discharge ramp being profiled in such a way that throughout the trajectory of material particles the ratio of the speed horizontal component to the vertical component of the said speed is increased, and by the fact that the profile of the discharge ramp (9) forms a continuous curve with that of the internal wall (4').

2. Bucket-wheel according to claim 1, characterized by the fact that the said continuous curve has a variable curvature radius, the value of which is at least equal to one fourth of the bucket-wheel radius.

3. Bucket-wheel according to claim 1 or 2, characterized by the fact that the tangent to the end of the profile of the discharge ramp (9) forms with the bucket-wheel radius passing through the said end, an angle (λ) not greater than 70°.

4. Bucket-wheel according to anyone of claims 1 or 3, characterized by the fact that the end of the discharge ramp (9) is located approximately on the fictive cylindrical surface which surrounds the digging edges (11) of the external wall (4'') of the buckets (4).

5. Bucket-wheel according to anyone of claims 1 to 4, characterized by the fact that the discharge ramp (9) of a bucket (4) consists, at least on part of its length, of a wall element of the preceding bucket in the direction of rotation of the bucket-wheel (1).

6. Bucket-wheel according to anyone of the preceding claims, characterized by the fact that a sloping plate (7) has been provided, which is perpendicular to the median vertical plane common to the bucket-wheel (1) and the bucket elevator (2), at a level below that of the rotation axis of the said bucket-wheel (1), on the discharge side, in such a way that the materials which would not have been poured into a bucket (6) of the elevator (2) strike the said plate which directs them to a following bucket of the said elevator.

## Ansprüche

1. Schaufelrad mit Bechern mit frontaler Schüttung, bestimmt insbesondere für die Beschickung mit Schüttgut der Becher eines senkrechten Förderers, dessen mittlere vertikale Ebene mit der des Schaufelrads übereinstimmt, während die Becher (4) des Schaufelrads (1) eine Innenwand (4') aufweisen, die durch eine schräge Schüttbahn (9) verlängert wird, dadurch gekennzeichnet, dass die Innenwand (4') eine konkav gekrümmte Form aufweist, dass die Schüttbahn (9) eine konkav gekrümmte Form aufweist, wobei die genannte Schüttbahn so profiliert ist, dass während der Förderung der Schüttgutteilchen auf der genannten Schüttbahn (9) das Verhältnis der horizontalen Geschwindigkeitskomponente zur vertikalen Komponente dieser Geschwindigkeit erhöht wird, und dass das Profil der Schüttbahn (9) mit dem der Innenwand (4') eine durchlaufende Kurve bildet.

2. Schaufelrad gemäss Anspruch 1, dadurch gekennzeichnet, dass die genannte durchlaufende Kurve einen veränderlichen Krümmungsradius besitzt, dessen Wert mindestens ein Viertel vom Radius des Schaufelrades (1) beträgt.

3. Schaufelrad gemäss einem der Ansprüche 1 oder 2, dadurch gekennzeichnet, dass die Tangente am Ende des Profils der Schüttbahn (9), gezogen mit dem Radius des Schaufelrades, dessen Verlängerung durch dieses Ende führt, einen Winkel λ von höchstens 70° bildet.

4. Schaufelrad gemäss einem der Ansprüche 1 bis 3, dadurch gekennzeichnet, dass sich das Ende der Schüttbahn (9) ziemlich genau an der gedachten zylindrischen Oberfläche befindet, welche die Angriffsrand (11) der Aussenwand (4″) der Becher (4) einschliesst.

5. Schaufelrad gemäss einem der Ansprüche 1 bis 4, dadurch gekennzeichnet, dass die Schüttbahn (9) eines Bechers (4) an mindestens einem Teil seiner Länge durch ein Element der Wand des in Drehrichtung des Schaufelrads (1) vorangehenden Bechers gebildet wird.

6. Schaufelrad gemäss einem beliebigen der vorangehenden Ansprüche, dadurch gekennzeichnet, dass ihm eine schräge Platte (7) beigegeben wird, die quer zur gemeinsamen vertikalen Ebene des Schaufelrads (1) und des Becherförderers (2), in einer geringeren Höhe als der der Drehachse des genannten Schaufelrads, an der Schüttseite angeordnet ist, so dass das Schüttgut, das nicht in einen Becher (6) des Förderers (2) gelangt ist, auf die genannte Platte trifft, die es in einen folgenden Becher des genannten Förderers leitet.

Fig. 1

Fig 2